# EUROPÄISCHE PATENTSCHRIFT

(11) **EP 3 116 750 B1**
(45) Veröffentlichungstag und Bekanntmachung des Hinweises auf die Patenterteilung: **20.09.2023**
(21) Anmeldenummer: 15711083.4
(22) Anmeldetag: 10.03.2015
(51) Int. Cl.: B60Q 1/08, B60Q 1/14, F21S 41/663, G06V 20/58

(54) **VERFAHREN ZUR BEREITSTELLUNG EINES FRONTLICHTES FÜR KRAFTFAHRZEUG, SOWIE BELEUCHTUNGSEINRICHTUNG FÜR EIN KRAFTFAHRZEUG**
METHOD FOR PROVIDING A HEADLIGHT FOR A MOTOR VEHICLE, AND ILLUMINATING DEVICE FOR A MOTOR VEHICLE
PROCÉDÉ SERVANT À FOURNIR UNE LUMIÈRE AVANT POUR DES VÉHICULES AUTOMOBILES, AINSI QUE DISPOSITIF D'ÉCLAIRAGE DESTINÉ À UN VÉHICULE AUTOMOBILE

(30) Priorität: 12.03.2014 DE 102014204614
(43) Veröffentlichungstag der Anmeldung: 18.01.2017
(73) Patentinhaber: Marelli Automotive Lighting Reutlingen (Germany) GmbH, 72762 Reutlingen (DE)
(72) Erfinder: ROSENHAHN, Ernst-Olaf, 72147 Nehren (DE)
(74) Vertreter: DREISS Patentanwälte PartG mbB
(86) Internationale Anmeldenummer: PCT/EP2015/054897
(87) Internationale Veröffentlichungsnummer: WO 2015/135901

(56) Entgegenhaltungen:
- EP-A1- 2 275 735
- EP-A2- 0 976 973
- EP-A2- 2 374 660
- DE-A1- 19 645 625
- DE-A1-102005 047 331
- DE-A1-102006 037 422
- DE-A1-102008 036 193
- DE-A1-102011 077 636
- JP-A- 2008 207 738

## Beschreibung

Die Erfindung betrifft ein Verfahren zur Bereitstellung eines blendfreien Frontlichtes für ein auf einer Fahrbahn fahrendes Kraftfahrzeug nach dem Oberbegriff des Anspruchs 1 sowie eine Beleuchtungseinrichtung zur Bereitstellung eines blendfreien Frontlichtes gemäß dem Oberbegriff des Anspruchs5. Ein solches Verfahren und eine solche Einrichtung sind jeweils aus der DE 10 2011 077 636 A1 und der JP 2008 207 738 bekannt. Aus der DE 10 2005 047 331 A1 ist ein Verfahren und eine Vorrichtung zur Beleuchtungssteuerung bei Straßenfahrzeugen bekannt, bei dem zwischen direkter Blendung und indirekter Blendung unterschieden wird.

Im Bereich der Beleuchtungseinrichtungen für Kraftfahrzeuge (Kfz) werden verschiedene Arten der ausgestrahlten Lichtverteilungen unterschieden, deren Eigenschaften weitgehend gesetzlich geregelt sind. Für Kfz sind insbesondere eine abgeblendete Lichtverteilung und eine Fernlichtverteilung vorgesehen, jedoch sind auch weitere Lichtverteilungen wie Seitenausleuchten oder Nebellicht bekannt.

Die abgeblendete Lichtverteilung weist grundsätzlich eine im bestimmungsgemäßen Betrieb der Beleuchtungseinrichtung abschnittsweise horizontal verlaufende Hell-Dunkel-Grenze auf, wobei der ausgeleuchtete Bereich sich unterhalb der Hell-Dunkel-Grenze insbesondere im Vorfeld des Kfz befindet. Durch den abgedunkelten Bereich oberhalb der Hell-Dunkel-Grenze wird eine direkte Blendung von entgegenkommenden oder vorausfahrenden Fahrzeugen vermieden. Die Hell-Dunkel-Grenze kann auch komplexere Formen aufweisen, um eine bessere Fahrbahnausleuchtung zu erzielen. Bekannt ist beispielsweise, dass die Hell-Dunkel-Grenze zumindest zwei horizontale Abschnitte aufweist, wobei der der Gegenfahrbahn abgewandte Abschnitt in vertikaler Richtung höher liegt, als der der Gegenfahrbahn zugewandte Abschnitt der Hell-Dunkel-Grenze, und wobei die beiden horizontalen Abschnitte durch einen schräg oder vertikal verlaufenden Abschnitt der Hell-Dunkel-Grenze verbunden sind (sog. "z-Shape"). Bekannt ist außerdem, dass die abgeblendete Lichtverteilung als Überlagerung von z.B. zwei funktional verschiedenen Lichtverteilungen erzeugt wird, die beispielsweise durch verschiedene Lichtmodule erzeugt werden. Beispielsweise kann die abgeblendete Lichtverteilung eine Grundlichtverteilung und einen Abblendlicht-Zusatzspot aufweisen. Die Grundlichtverteilung ist z.B. ein breitgestreutes Lichtband, welches das Fahrzeugvorfeld möglichst homogen ausleuchtet und eine im Wesentlichen horizontal verlaufende Hell-Dunkel-Grenze aufweist. Der Abblendlicht-Zusatzspot kann zur Erhöhung der Reichweite in einem im Wesentlichen mittigen, sich unmittelbar an die Hell-Dunkel-Grenze anschließenden Bereich vorgesehen sein und ebenfalls eine obere Hell-Dunkel-Grenze aufweisen. Die abgeblendete Lichtverteilung kann jedoch auch einheitlich, also nicht als Überlagerung mehrerer Teillichtverteilungen erzeugt werden.

Die Fernlicht-Lichtverteilung erstreckt sich zumindest abschnittsweise oberhalb der Hell-Dunkel-Grenze und hat daher eine vergleichsweise größere Reichweite. Die Fernlichtverteilung kann dabei mit der abgeblendeten Lichtverteilung unterhalb der Hell-Dunkel-Grenze überlappen. Auch hier ist es bekannt, dass die Fernlicht-Lichtverteilung als Überlagerung mehrere TeilLichtverteilungen, z.B. einer Fernlicht-BasisLichtverteilung und einer im Vergleich hierzu insbesondere mittig oberhalb der Hell-Dunkel-Grenze konzentrierten Fernlicht-Zusatzspot-Lichtverteilung erzeugt wird.

In der DE 10 2008 036 193 A1 ist z.B. beschrieben, wie die genannten Lichtverteilungen in einer gemeinsamen Beleuchtungseinrichtung mit drei Lichtmodulen erzeugt werden können.

Durch die Fernlichtverteilung können vorausfahrende oder entgegenkommende Fahrzeuge direkt geblendet werden. Um dies zu vermeiden und dennoch eine Fernausleuchtung der Fahrbahn zu erzielen, sind adaptive Fernlichteinrichtungen bekannt. Hierbei werden in der Fernlichtverteilung solche Bereiche ausgeblendet oder gedimmt, in welchen andere Verkehrsteilnehmer erkannt werden, wie beispielsweise in der DE 10 2008 036 193 A1 oder der DE 10 2011 077 636 A1 beschrieben. Dies kann insbesondere kameragesteuert erfolgen, wobei eine Kamera den Fahrbahnverlauf aufnimmt und das Bild entsprechend ausgewertet wird, um die anderen Verkehrsteilnehmer zu erkennen (siehe beispielsweise DE 10 2009 002 101 A1).

Bei Schlechtwetterbedingungen, insbesondere bei Nässe auf der Fahrbahn, kann es insbesondere aufgrund von reflektiertem oder gestreutem Licht dennoch zu gefährlichen Blendungen von vorausfahrenden oder entgegenkommenden Fahrzeugen kommen.

Der Erfindung liegt die Aufgabe zugrunde, für ein Kfz eine Frontlicht-Beleuchtung bereitzustellen, bei welcher auch bei Schlechtwetterbedingungen, insbesondere bei Nässe auf der Fahrbahn, eine Blendung von anderen Verkehrsteilnehmern weitgehend verhindert wird und dennoch eine möglichst helle und weiträumige Ausleuchtung der Fahrbahn erzielt wird.

Diese Aufgabe wird durch ein Verfahren gemäß Anspruch 1 und durch eine Beleuchtungseinrichtung gemäß Anspruch 5 gelöst. Hierbei wird eine abgeblendete Lichtverteilung ausgestrahlt, die im bestimmungsgemäßen Betrieb der Beleuchtungseinrichtung eine zumindest abschnittsweise horizontal verlaufende Hell-Dunkel-Grenze aufweist. Mit einer Bildaufnahmeeinrichtung, z.B. Kamera, wird ein Sichtfeld überwacht und das Vorhandensein sowie die Lage von entgegenkommenden und/oder vorausfahrenden Fahrzeugen - oder allgemeiner von Verkehrsteilnehmern - in dem Sichtfeld erkannt, was insbesondere mittels einer geeigneten Bildauswerteeinrichtung erfolgt.

Dabei wird mit einer Detektionseinrichtung erkannt, ob Feuchtigkeit oder Glätte auf der Fahrbahn in einer solchen Art und Menge vorhanden ist, dass es zu einer Reflexion der abgeblendeten Lichtverteilung an der Oberfläche der Fahrbahn und dadurch zu einer Blendung von Verkehrsteilnehmern kommen kann. Insbesondere wird das Vorhandensein einer reflektierenden Wasserschicht oder von Pfützen erkannt. Denkbar ist auch eine Überwachung, ob die Fahrbahn eine reflektierende Glätte, z.B. Eis, aufweist. Gemäß dem Verfahren wird dann, wenn Schlechtwetterbedingungen wie z.B. Feuchtigkeit auf der Fahrbahn erkannt wird und ein Verkehrsteilnehmer auf dem Sichtfeld erkannt wird, eine dem Verkehrsteilnehmer zugeordnete ausgeblendete Zone in der abgeblendeten Lichtverteilung erzeugt.

Insofern werden bei Nässe und bei Vorhandensein von entgegenkommendem oder vorausfahrendem Verkehr diejenigen Zonen in der abgeblendeten Lichtverteilung ausgeblendet, welche zur Blendung der anderen Verkehrsteilnehmer führen können. Die ausgeblendete Zone ist der Lage des im Sichtfeld erkannten Verkehrsteilnehmers derart zugeordnet, dass eine Blendung durch Reflexion der abgeblendeten Lichtverteilung an der nassen Fahrbahnoberfläche weitgehend vermieden wird. Da die ausgeblendete Zone gezielt für einen erkannten Verkehrsteilnehmer erzeugt wird, muss nicht ein vergleichsweise großer Bereich der abgeblendeten Lichtverteilung bei Schlechtwetterbedingungen sicherheitshalber abgedunkelt werden. Die ausgeblendete Zone wird insbesondere auch unterhalb der Hell-Dunkel-Grenze erzeugt, also in der abgeblendeten Lichtverteilung. Durch die beschriebene Art des Betriebs des Frontlichts wird die Sicherheit im Straßenverkehr auch bei Schlechtwetterbedingungen erhöht.

Die Bildaufnahmeeinrichtung überwacht ein Sichtfeld, welches grundsätzlich ein von der Beleuchtungseinrichtung ausgehender Raumwinkelbereich ist. In Projektion auf einen senkrecht zur Fahrtrichtung bzw. Abstrahlrichtung der Beleuchtungseinrichtung aufgespannten Testschirm betrachtet, ist das Sichtfeld beispielsweise ein im Wesentlichen rechteckiger oder streifenförmiger Bereich.

Die ausgeblendeten Zonen sind Raumwinkelbereiche, welche ausgehend von der Beleuchtungseinrichtung nicht ausgeleuchtet sind. Auf einem entfernten, im Wesentlichen senkrecht zur Abstrahlrichtung der Beleuchtungseinrichtung orientierten Testschirm betrachtet, führen solche ausgeblendeten Raumwinkelbereiche zu dunklen Zonen, die vorliegend als ausgeblendete Zonen bezeichnet sind. Die ausgeblendeten Zonen lassen sich jeweils bestimmten Bereichen des Sichtfeldes zugeordnet erzeugen. Die Zonen sind ausgeblendet insofern, als sie nicht mit Licht der Beleuchtungseinrichtung ausgeleuchtet werden, oder zumindest im Vergleich zur übrigen Lichtverteilung erheblich abgedunkelt sind, insbesondere nur einen Bruchteil der Intensität aufweisen (z.B. weniger als 50%).

Erfindungsgemäß wird dann eine ausgeblendete Zone erzeugt, wenn die Detektionseinrichtung Feuchtigkeit auf der Fahrbahn erkennt, da besonders bei solchen Fahrbahnbedingungen ein Blendungsrisiko durch Reflexion der abgeblendeten Lichtverteilung besteht. Dabei wird eine ausgeblendete Zone auch nur in solchen Bereichen des Sichtfeldes erzeugt, in welchen überhaupt ein Verkehrsteilnehmer erkannt wird. Die anderen Bereiche können grundsätzlich vollständig ausgeleuchtet werden, wobei dies nicht zwingend ist.

Die ausgeblendete Zone liegt im Sichtfeld betrachtet, an einer solchen Position entlang der Hell-Dunkel-Grenze, an welcher sich der erkannte Verkehrsteilnehmer befindet. Die ausgeblendete Zone erstreckt sich dann im Sichtfeld betrachtet unterhalb des erkannten Verkehrsteilnehmers, insbesondere unterhalb der Hell-Dunkel-Grenze in der abgeblendeten Lichtverteilung, insbesondere bis ins Vorfeld des Kraftfahrzeugs.

Die ausgeblendete Zone umfasst erfindungsgemäß einen streifenförmigen Bereich in der abgeblendeten Lichtverteilung, welcher sich ausgehend von der Hell-Dunkel-Grenze oder von einer hierzu etwa parallelen und tiefer gelegenen horizontalen Linie im bestimmungsgemäßem Betrieb der Beleuchtungseinrichtung nach vertikal unten in das Vorfeld des Kfz erstreckt. Die ausgeblendete Zone wird insbesondere an einer solchen Position entlang der Hell-Dunkel-Grenze erzeugt, an welcher der Verkehrsteilnehmer erkannt wird.

Die ausgeblendete Zone weist insbesondere eine vertikale Hell-Dunkel-Grenze auf, welche vorzugsweise senkrecht zur Hell-Dunkel-Grenze der abgeblendeten Lichtverteilung verläuft. Die ausgeblendete Zone ist insbesondere von vertikalen Hell-Dunkel-Grenzen beiderseitig begrenzt.

Für ein erfasstes vorausfahrendes und/oder entgegenkommendes Fahrzeug wird vorzugsweise dessen Ausdehnung in dem Sichtfeld ermittelt und die horizontale Breite (insbesondere die entlang der Hell-Dunkel-Grenze gemessene Breite) der ausgeblendeten Zone im Sichtfeld derart eingestellt, dass sie gleich groß oder größer als die Ausdehnung des erfassten Fahrzeuges im Sichtfeld ist. Dadurch kann Blendung auch durch seitliche Streuung vermieden werden. Denkbar ist jedoch auch, eine geringere Breite der ausgeblendeten Zone zu wählen, die einem Kompromiss zwischen verbesserter Fahrbahnausleuchtung und verminderter Blendung durch Reflexe entspricht.

Erfindungsgemäß wird zusätzlich eine Fernlichtverteilung ausgestrahlt, die sich zumindest abschnittsweise oberhalb der Hell-Dunkel-Grenze erstreckt. Dabei wird dann, wenn ein Verkehrsteilnehmer erkannt wird, eine dem erkannten Verkehrsteilnehmer zugeordnete ausgeblendete Fernlichtzone in der Fernlichtverteilung erzeugt. Insbesondere wird die ausgeblendete Fernlichtzone in dem Bereich des Sichtfeldes erzeugt, in welchem der Verkehrsteilnehmer erkannt wird. Die ausgeblendete Fernlichtzone wird vorzugsweise auch dann erzeugt, wenn keine Nässe oder Feuchtigkeit auf der Fahrbahn detektiert wird. In dieser Situation kann die oben genannte Ausblendung in den abgeblendeten Lichtverteilungen unterbleiben, da bei trockener Fahrbahnoberfläche Reflexionen weniger stark ausgeprägt sind. Im Fernlicht ist die Ausblendung von blendungsgefährlichen Bereichen jedoch grundsätzlich erwünscht.

Die ausgeblendete Zone in der Abblendlichtverteilung ist insbesondere als eine Fortsetzung der ausgeblendeten Fernlichtzone in Richtung unterhalb der Hell-Dunkel-Grenze ausgebildet.

Die ausgeblendete Fernlichtzone weist erfindungsgemäß eine horizontale Breite auf, welche größer ist als die horizontale Breite der zugeordneten ausgeblendeten Zone in der abgeblendeten Lichtverteilung. So kann einerseits eine ausreichende Grundhelligkeit des Fahrzeugvorfeldes sichergestellt werden und andererseits eine Blendung in ausreichendem Maße vermieden werden. Weiterhin ist denkbar, dass das Verhältnis der Breiten von ausgeblendeter Fernlichtzone und ausgeblendeter Zone in der abgeblendeten Lichtverteilung in Abhängigkeit der Ausdehnung (insbesondere der horizontale Breite) des erkannten Verkehrsteilnehmers eingestellt wird.

Die ausgeblendete Fernlichtzone ist vorzugsweise von wenigstens einer vertikalen Hell-Dunkel-Grenze begrenzt, ähnlich wie vorstehend zu den ausgeblendeten Zonen in der abgeblendeten Lichtverteilung erläutert.

Dabei ist der Hell-Dunkel-Übergang zwischen einer ausgeblendeten Zone in der abgeblendeten Lichtverteilung und der übrigen abgeblendeten Lichtverteilung vorzugsweise weniger kontrastreich (d.h. mit weniger steilem Intensitätssprung), als der Hell-Dunkel-Übergang zwischen der ausgeblendeten Fernlichtzone und der übrigen Fernlichtverteilung. Umgekehrt ist der Hell-Dunkel-Übergang zwischen einer ausgeblendeten Fernlichtzone und der übrigen Fernlichtverteilung vorzugsweise schärfer (d.h. mit steilerem Intensitätssprung) als der Hell-Dunkel-Übergang zwischen der zugeordneten ausgeblendeten Zone in abgeblendeten Lichtverteilung und übrigen abgeblendeten Lichtverteilung.

Zur weiteren Ausgestaltung kann eine Zusatzausleuchtung für die abgeblendete Lichtverteilung unterhalb der Hell-Dunkel-Grenze vorgesehen sein. Diese Zusatzausleuchtung ist insbesondere in der Art eines Abblendlicht-Zusatzspots ausgebildet. Die Zusatzausleuchtung wird insbesondere nur in bestimmten Bereichen der abgeblendeten Lichtverteilung bereitgestellt. Diese Bereiche sind vorzugsweise derart positioniert, dass eine Blendung des erkannten Verkehrsteilnehmers durch Reflexion der Zusatzausleuchtung an der Fahrbahn vermieden wird. Denkbar ist auch, dass die Zusatzausleuchtung in solchen Bereichen bereitgestellt wird, in welchen kein Verkehrsteilnehmer erkannt wird. Es kann auch ein außermittiger Seitenbereich der abgeblendeten Lichtverteilung verstärkt mit der Zusatzausleuchtung beleuchtet sein, sofern dort kein Verkehrsteilnehmer erkannt wird. Dadurch kann für den Fahrer subjektiv das Helligkeitsempfinden erhöht werden und die empfundene Abdunkelung durch die ausgeblendeten Zonen verringert werden.

Die Zusatzausleuchtung ist, insbesondere in an die Hell-Dunkel-Grenze unmittelbar anschließenden Bereichen der abgeblendeten Lichtverteilung, vorzugsweise ständig aktiviert und nur dann deaktiviert, wenn in dem zugeordneten Bereich des Sichtfeldes ein Verkehrsteilnehmer erkannt wird. Denkbar ist auch, dass die Zusatzausleuchtung gerade dann aktiviert wird, wenn die Detektionseinrichtung eine Schlechtwettersituation (insbesondere Feuchtigkeit) erkennt, und die Zusatzausleuchtung deaktiviert wird, wenn keine Schlechtwettersituation erkannt wird.

Zur Detektion der Feuchtigkeit auf der Fahrbahn kann in vorteilhafter Weise ein Bildsignal der Bilderkennungseinrichtung ausgewertet werden. Insofern umfasst die Detektionseinrichtung zur Feuchtigkeitserkennung die Bilderkennungseinrichtung, oder wird von dieser gebildet. Möglich ist beispielsweise, Reflexe der ausgestrahlten Lichtverteilung im Bildsignal der Bilderkennungseinrichtung auszuwerten. Dadurch kann direkt erkannt werden, ob auf der Fahrbahn Feuchtigkeit in einem solchen Ausmaß vorhanden ist, dass eine Blendung durch Reflexion möglich ist. Diese Auswertung kann zuverlässiger sein, als beispielsweise die Detektion von Feuchtigkeit mit einem Regensensor oder Feuchtigkeitssensor. Derartige Sensoren können jedoch auch vorteilhaft sein, beispielsweise als günstige Alternative zur Bildauswertung oder zur Ergänzung der Nässeerkennung über das Bildsignal.

Die eingangs gestellte Aufgabe wird auch durch eine Beleuchtungseinrichtung gelöst, welche dazu eingerichtet ist, ein blendfreies Frontlicht für das auf der Fahrbahn fahrende Kraftfahrzeug bereitzustellen. Diese Beleuchtungseinrichtung ist insbesondere speziell dazu ausgebildet, ein Verfahren der vorstehend beschriebenen Art auszuführen.

Die Beleuchtungseinrichtung umfasst eine Abblendlichteinrichtung, z.B. ein Abblendlichtmodul, zur Abgabe einer abgeblendeten Lichtverteilung mit einer im bestimmungsgemäßen Betrieb der Beleuchtungseinrichtung zumindest abschnittsweise horizontal verlaufenden Hell-Dunkel-Grenze. Ferner ist eine Bildaufnahmeeinrichtung vorgesehen, sowie eine dieser zugeordnete Bildauswerteeinrichtung. Diese Einrichtungen sind dazu vorgesehen, in einem Sichtfeld das Vorhandensein und die Lage von entgegenkommenden und/oder vorausfahrenden Fahrzeugen zu erkennen. Ferner ist eine Detektionseinrichtung vorgesehen, welche dazu eingerichtet ist, zu erkennen, ob Feuchtigkeit in einer solchen Art und Menge auf der Fahrbahn vorhanden ist, dass es zu einer Reflexion der abgeblendeten Lichtverteilung an der Oberfläche der Fahrbahn kommen kann. Die Abblendlichteinrichtung umfasst eine (aktivierbare und deaktivierbare) Blendschutzeinrichtung zur Erzeugung von wenigstens einer ausgeblendeten Zone in veränderbarer Lage in der abgeblendeten Lichtverteilung. Die Blendschutzeinrichtung wirkt derart mit der Detektionseinrichtung und der Bildauswerteeinrichtung zusammen, dass dann, wenn Feuchtigkeit auf der Fahrbahn erkannt wird und ein Verkehrsteilnehmer in dem Sichtfeld erkannt wird, eine dem erkannten Verkehrsteilnehmer zugeordnete ausgeblendete Zone in der abgeblendeten Lichtverteilung erzeugt wird.

Die Blendschutzeinrichtung ist derart ausgebildet, dass die ausgeblendete Zone ein im Vergleich zur übrigen Abblendlichtverteilung dunkler, insbesondere streifenförmiger Bereich ist. Die ausgeblendete Zone weist dabei bei bestimmungsgemäßem Betrieb der Beleuchtungseinrichtung wenigstens eine vertikal verlaufende Hell-Dunkel-Grenze auf.

Die Blendschutzeinrichtung ist allgemein derart ausgebildet, dass mit der gesamten Abblendlichteinrichtung eine abgeblendete Lichtverteilung mit einer ausgeblendeten Zone in veränderbarer Lage ausstrahlbar ist. Insofern kann die Blendschutzeinrichtung eine zusätzliche Einrichtung mit in den Strahlengang herein- und herausbewegbaren Abschnitten (z.B. Blendenelementen) sein, mittels welchen gezielt eine Zone ausgeblendet werden kann.

Die Abblendlichteinrichtung kann jedoch auch eine Komplex-Lichtquelle mit einer Mehrzahl von beispielsweise matrixartig oder zeilenartig angeordneten Lichtquellen (z.B. LEDs) aufweisen, wobei der Komplex-Lichtquelle eine Optikeinrichtung derart zugeordnet ist, dass das Licht der verschiedenen Lichtquellen in jeweils den Lichtquellen zugeordnete und aneinander anschließende oder überlappende Lichtsegmente umgelenkt wird, und wobei einzelne Lichtquellen gezielt aktivierbar und deaktivierbar sind, so dass gezielt ein einer Lichtquelle zugeordnetes Lichtsegment ausblendbar ist. Dadurch kann die angesprochene Blendschutzeinrichtung ohne mechanisch bewegliche Teile realisiert werden, insbesondere integriert in die eigentliche Lichtquelleneinheit.

Vorzugsweise erzeugt die Blendschutzeinrichtung überhaupt nur dann eine ausgeblendete Zone, wenn die Detektionseinrichtung Feuchtigkeit auf der Fahrbahn erkennt. Insofern ist die Blendschutzeinrichtung vorzugsweise nur dann aktiviert, wenn die Detektionseinrichtung Feuchtigkeit erkennt. Ferner wird vorzugsweise nur dann eine ausgeblendete Zone erzeugt, wenn auch ein Verkehrsteilnehmer erkannt wird. Außerdem wird insbesondere nur in einem solchen Bereich der abgeblendeten Lichtverteilung eine ausgeblendete Zone erzeugt, welcher zu einer Blendung durch Reflexion an der Fahrbahnoberfläche führen kann.

Die Beleuchtungseinrichtung kann zusätzlich eine Fernlichteinrichtung zur Ausstrahlung einer Fernlichtverteilung aufweisen, die sich zumindest abschnittsweise oberhalb der Hell-Dunkel-Grenze erstreckt. Dieser zugeordnet kann eine Fernlichtblendschutzeinrichtung zur Erzeugung von wenigstens einer ausgeblendeten Fernlichtzone in veränderbarer Lage in der Fernlichtverteilung vorgesehen sein. Dabei wirkt die Fernlichtblendschutzeinrichtung derart mit der Bildauswerteeinrichtung zusammen, dass dann, wenn ein Verkehrsteilnehmer in dem Sichtfeld erkannt wird, eine dem erkannten Verkehrsteilnehmer zugeordnete ausgeblendete Fernlichtzone erzeugt wird, so dass eine Blendung des Verkehrsteilnehmers vermieden wird.

Ähnlich wie zu der Abblendlichteinrichtung erläutert, kann die Fernlichteinrichtung eine Komplex-Lichtquelle mit einer Mehrzahl von beispielsweise matrixartig oder zeilenartig angeordneten Lichtquellen (z.B. LEDs) aufweisen. Die verschiedenen Lichtquellen sind insbesondere individuell aktivierbar und deaktivierbar. Dadurch kann gezielt eine ausgeblendete Fernlichtzone erzeugt werden und auf diese Weise die angesprochene Fernlichtblendschutzeinrichtung realisiert werden.

Die Detektionseinrichtung kann einen insbesondere von der Bildaufnahmeeinrichtung separaten Regensensor oder Feuchtigkeitssensor umfassen. Zusätzlich oder alternativ hierzu kann jedoch auch vorgesehen sein, dass ein Bildsignal der Bilderkennungseinrichtung von einer geeigneten Auswerteeinrichtung ausgewertet wird und dadurch erkannt wird, ob Feuchtigkeit auf der Fahrbahn vorhanden ist.

Weitere Einzelheiten und Ausgestaltungen werden im Folgenden anhand der Figuren erläutert.

### Es zeigen:

- Figur 1: Darstellung des Sichtfeldes vor einem Kraftfahrzeug aus Sicht des Fahrers zur Erläuterung der verschiedenen Lichtverteilungen;
- Figur 2: Darstellung entsprechend Figur 1 bei Gegenverkehr auf einer Gegenfahrbahn und bei Schlechtwetterbedingungen;
- Figur 3: entsprechende Darstellung bei Schlechtwetterbedingungen in einer anderen Verkehrssituation; und
- Figur 4: skizzierte Darstellung einer Beleuchtungseinrichtung.

In der nachfolgenden Beschreibung sowie in den Figuren sind für identische oder einander entsprechende Merkmale jeweils dieselben Bezugszeichen verwendet.

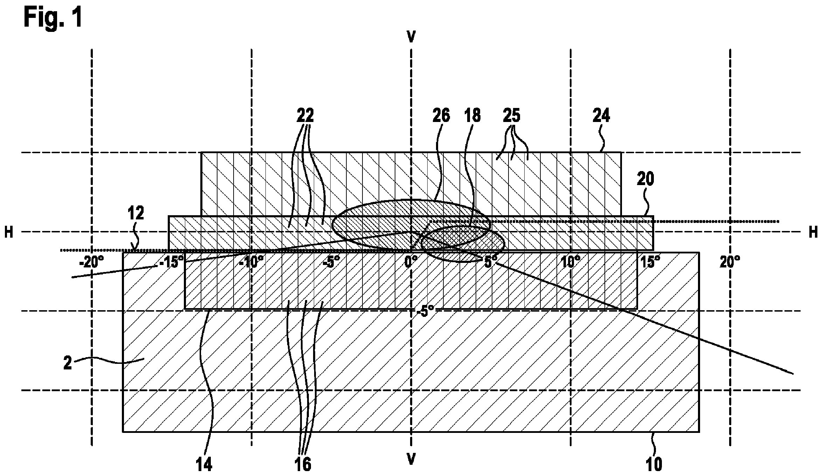

Zur Erläuterung des Beleuchtungsbildes und der erfindungsgemäßen Ausgestaltungen zeigen die Figuren 1 bis 3 je eine Sichtsituation aus Sicht eines Fahrers eines auf einer Fahrbahn 2 fahrenden Kraftfahrzeugs Kfz (nicht dargestellt) in eine Fahrtrichtung, welche auch die Hauptabstrahlrichtung einer Beleuchtungseinrichtung des Kfz bildet. Die verschiedenen Lichtverteilungen sind jeweils als ausgeleuchtete Felder dargestellt, wie sie beispielsweise auf einem sich senkrecht zur Abstrahlrichtung der Beleuchtungseinrichtung des Fahrzeuges erstreckenden, beabstandeten Testschirm beobachtet werden können. Die dargestellte Zeichenebene repräsentiert jeweils auch ein Sichtfeld, welches beispielsweise von einer Bildaufnahmeeinrichtung, z.B. Kamera, überwacht wird, um die Erzeugung der erläuterten Lichtverteilungen entsprechend anzusteuern.

Die gesamte Lichtverteilung der Beleuchtungseinrichtung entsteht im dargestellten Beispiel als Überlagerung verschiedener Teillichtverteilungen. Grundsätzlich wird eine abgeblendete Lichtverteilung und eine Fernlichtverteilung erzeugt. Wie in Figur 1 erkennbar, weist die abgeblendete Lichtverteilung zunächst eine Abblendlicht-Grundlichtverteilung 10 auf, welche eine breitgestreute, das Fahrzeugvorfeld möglichst homogen ausleuchtende Intensitätsverteilung mit einer zumindest abschnittsweise horizontal verlaufenden Hell-Dunkel-Grenze 12 aufweist, welche den ausgeleuchteten Bereich im Fahrzeugvorfeld von einer Fernzone trennt. In der Sichtfelddarstellung der Figuren 1 bis 3 entspricht die Fernzone dem vertikal oben liegenden Bereich der Zeichenebene, das Fahrzeugvorfeld dem vertikal unten liegenden Bereich.

Im dargestellten Beispiel umfasst die abgeblendete Lichtverteilung außerdem eine Abblendlicht-Zusatzlichtverteilung 14, welche sich unmittelbar an die Hell-Dunkel-Grenze 12 anschließt und sich nur eine begrenzte Tiefe in Richtung des Fahrzeugvorfeldes erstreckt. Die Abblendlicht-Zusatzlichtverteilung 14 setzt sich aus einer Vielzahl von streifenartigen Abblendsegmenten 16 zusammen, welche insbesondere eine höhere Intensität aufweise, als die Abblendlicht-Grundlichtverteilung 10. Die erstrecken sich ausgehend von der Hell-Dunkel-Grenze 12 in Richtung des Fahrzeugvorfeldes. Die Abblendlicht-Segmente 16 können unmittelbar aneinander anschließen oder auch geringfügig überlappen. Die Beleuchtungseinrichtung des Kraftfahrzeuges ist derart ausgebildet, dass die Abblendlichtsegmente 16 im Wesentlichen einzeln aktiviert und deaktiviert werden können, wie nachfolgend noch näher erläutert.

Die abgeblendete Lichtverteilung kann zusätzlich einen Abblendlicht-Zusatzspot 18 umfassen, welcher bei Bedarf aktiviert und deaktiviert werden kann. Der Abblendlicht-Zusatzspot 18 kann eine vergleichsweise höhere Intensität aufweisen und leuchtet vorzugsweise einen Bereich unmittelbar an der Hell-Dunkel-Grenze 12 aus. Im dargestellten Beispiel ist der Abblendlicht-Zusatzspot 18 außermittig auf Seiten der Eigenfahrbahn (hier: rechts) vorgesehen, um eine Blendung von Gegenverkehr durch den Abblendlicht-Zusatzspot 18 zu vermeiden.

Eine Fernlichtverteilung umfasst im dargestellten Beispiel zunächst eine Fernlicht-Basislichtverteilung 20, welche einen Bereich oberhalb der Hell-Dunkel-Grenze 12 ausleuchtet und sich vorzugsweise unmittelbar an diese anschließt. Die Fernlicht-Basislichtverteilung 20 ist vorzugsweise als Überlagerung einer Vielzahl von Fernlichtsegmenten 22 ausgebildet, welche insbesondere als streifenartige Segmente 22 ausgebildet sind, die entlang der Hell-Dunkel-Grenze 12 betrachtet unmittlbar aneinander anschließen oder geringfügig überlappen. Die Beleuchtungseinrichtung des Fahrzeuges ist insbesondere derart ausgebildet, dass einzelne Fernlicht-Segmente 22 unabhängig voneinander aktivierbar und deaktivierbar sind.

Grundsätzlich ist es vorteilhaft, wenn die Fernlichtverteilung außerdem eine obere Fernlichtverteilung 24 aufweist, welche sich in dem von der Hell-Dunkel-Grenze 12 beabstandeten Bereich des Sichtfeldes an die Fernlicht-Basislichtverteilung 20 anschließt, also vertikal oberhalb der Fernlicht-Basislichtverteilung 20 liegt. Für sich betrachtet, leuchtet die obere Fernlichtverteilung 24 insofern einen Bereich aus, welcher in vertikal oberer Richtung von der Hell-Dunkel-Grenze 12 beabstandet ist. Unabhängig von der konkreten Ausgestaltung der Beleuchtungseinrichtung und der übrigen Lichtverteilungen ist die obere Fernlichtverteilung 24 vorzugsweise aktivierbar und deaktivierbar, wie nachfolgend noch näher erläutert. Auch die obere Fernlichtverteilung 24 kann aus individuell aktivierbaren und deaktivierbaren Segmenten 25 zusammengesetzt sein, wie vorstehend für die Fernlicht-Basislichtverteilung 20 und die Abblendlicht-Zusatzlichtverteilung 14 beispielhaft erläutert.

Die Fernlichtverteilung umfasst vorzugsweise außerdem einen Fernlicht-Zusatzspot 26, welcher als eine konzentrierte Lichtverteilung im mittigen Bereich des Sichtfeldes, insbesondere knapp oberhalb der Hell-Dunkel-Grenze 12 ausgebildet ist. Der Fernlicht-Zusatzspot 26 ist vorzugsweise unabhängig von den übrigen Lichtverteilungen aktivierbar und deaktivierbar.

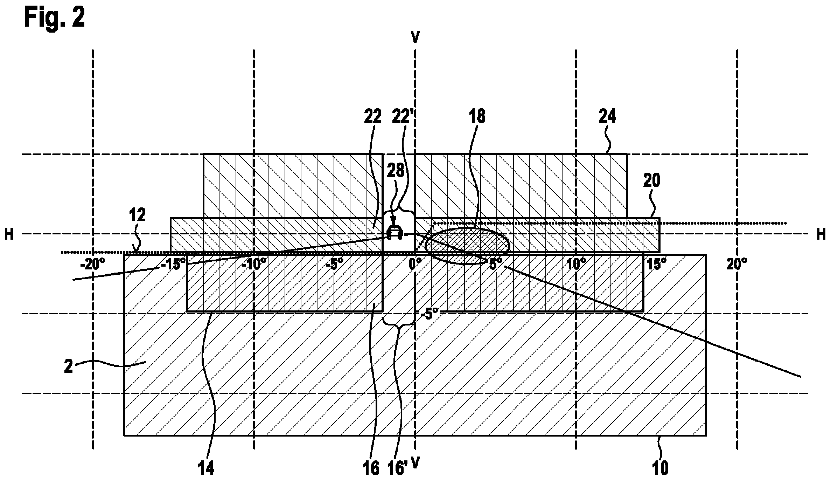

Die Figur 2 zeigt eine Verkehrssituation, bei der sich auf der Fahrbahn 2 ein anderer Verkehrsteilnehmer 28 befindet. Im dargestellten Beispiel ist der Verkehrsteilnehmer 28 ein entgegenkommendes Fahrzeug auf einem Bereich der Fahrbahn 2, welcher die Gegenfahrbahn darstellt (hier: linker Fahrbahnbereich). Darüber hinaus wird in Figur 2 das Vorliegen von Schlechtwetterbedingungen angenommen, insbesondere das Vorhandensein von Feuchtigkeit auf der Fahrbahn in Form eines Wasserbelages auf der Fahrbahnoberfläche, der zu einer Reflexion von Licht der Beleuchtungseinrichtung des Kraftfahrzeugs führen kann. Außerdem wird angenommen, dass im Sichtfeld über der Fahrbahn 2 erschwerende Umweltbedingungen wie Regen, Schnee oder Nebel vorliegen, welche zur Streuung und/oder Reflexion der eigenen Lichtverteilung führen können und so die Gefahr einer Eigenblendung des Fahrers durch die eigene Beleuchtungseinrichtung bergen.

Im Zusammenhang mit der vorliegenden Erfindung wird zunächst mit einer geeigneten Detektionseinrichtung erkannt, dass auf der Fahrbahn 2 eine potentiell lichtreflektierende Feuchtigkeitssituation vorliegt. Hierauf kann auf das Vorliegen von Schlechtwetterbedingungen geschlossen werden.

Nach einem grundsätzlichen Aspekt kann bei Schlechtwetterbedingungen zunächst die vertikal oben liegende obere Fernlichtverteilung 24 ausgeblendet werden, um eine Eigenblendung des Fahrers durch Streuung bzw. Reflexion von Licht im vertikal oben liegenden Bereich des Sichtfeldes zu vermeiden. Dies ist beispielhaft in Figur 2 dargestellt. Bei Schlechtwetterbedingungen kann oftmals mit einer auf einen begrenzten Bereich oberhalb der Hell-Dunkel-Grenze eingeschränkten Fernlichtverteilung (z.B. die Fernlicht-Basislichtverteilung 20) eine bessere Sicht erzielt werden.

Im Zusammenhang mit der vorliegenden Erfindung wird außerdem mit einer Bildaufnahmeeinrichtung erkannt, ob sich auf der Fahrbahn 2 eine Verkehrsteilnehmer 28 befindet. Ist dies der Fall, so wird die Lage und vorzugsweise auch die Ausdehnung des Verkehrsteilnehmers 28 im Sichtfeld bestimmt.

Um eine direkte Blendung des Verkehrsteilnehmers 28 zu vermeiden, werden zunächst diejenigen Fernlicht-Segmente 22' der Fernlicht-Basislichtverteilung 20 ausgeblendet, welche dem Bereich des Sichtfeldes zugeordnet sind, in welchem der Verkehrsteilnehmer 28 erkannt worden ist. Dies kann auch unabhängig von dem Vorliegen von Schlechtwetterbedingungen erfolgen. Sofern jedoch Feuchtigkeit auf der Fahrbahn 2 erkannt worden ist, werden erfindungsgemäß außerdem diejenigen Abblendlicht-Segmente 16' der Abblendlicht-Zusatzlichtverteilung 14 ausgeblendet, welche durch Reflexion an der nassen Fahrbahnoberfläche 2 zu einer Blendung des Verkehrsteilnehmers 28 führen können. Die ausgeblendeten Abblendlichtsegmente 16' sind vorzugsweise diejenigen Abblendlichtsegmente, welche sich entlang der Hell-Dunkel-Grenze 12 an derjenigen Position befinden, an welcher auch der Verkehrsteilnehmer 28 erkannt worden ist. Insbesondere werden solche Abblendlichtsegmente 16' ausgeblendet, dass die durch Ausblendung der dem Verkehrsteilnehmer 28 zugeordneten Fernlichtsegmente 22' erzeugte dunkle Fernlichtzone auch unterhalb der Hell-Dunkel-Grenze als helligkeitsreduzierte Zone der abgeblendeten Lichtverteilung fortgesetzt wird. Im dargestellten Beispiel bleibt die Abblendlicht-Grundlichtverteilung 10 unverändert, da diese eine vergleichsweise geringe Intensität aufweist und daher ein nur geringes Blendungsrisiko birgt. Denkbar ist jedoch auch, dass die abgeblendete Lichtverteilung in dem dem Verkehrsteilnehmer 28 wie beschrieben zugeordneten Bereich vollständig ausgeblendet wird. Hierzu kann beispielsweise die gesamte abgeblendete Lichtverteilung aus individuell aktivierbaren und deaktivierbaren Segmenten aufgebaut sein.

Da im Falle der Figur 2 der erkannte Verkehrsteilnehmer 28 in dem dem Gegenverkehr zugeordneten (linken) Bereich der Fahrbahn 2 erkannt wurde, kann der außermittig, im Sichtfeld dem Gegenverkehr abgewandte Abblendlicht-Zusatzspot 18 unabhängig von dem Vorliegen der Schlechtwetterbedingung und/oder dem erkannten Verkehrsteilnehmer 28 aktiviert sein. So kann eine ausreichend helle Fahrbahnausleuchtung sichergestellt werden und dabei eine Blendung des Gegenverkehrs einerseits und eine Eigenblendung des Fahrers aufgrund der Schlechtwetterbedingungen anderseits vermieden werden.

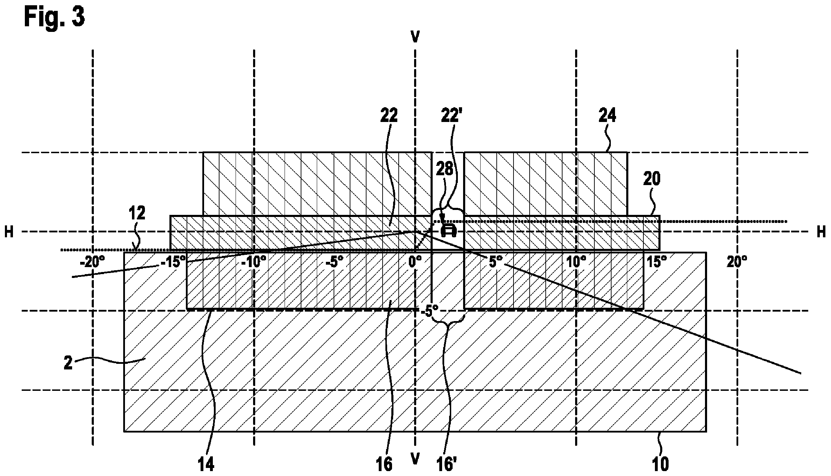

Die Figur 3 zeigt eine im Vergleich zu Figur 2 veränderte Verkehrssituation bei Schlechtwetterbedingungen. Hier befindet sich der erkannte Verkehrsteilnehmer 28 in einem außermittigen, rechten Bereich des Sichtfeldes. Diese Situation kann beispielsweise in einer Rechtskurve der Fahrbahn 2 auftreten. Denkbar ist auch, dass es sich bei dem erkannten Verkehrsteilnehmer 28 nicht um Gegenverkehr, sondern um ein vorausfahrendes Fahrzeug auf der eigenen Fahrbahnseite handelt. Auch hier kann eine direkte Blendung des Verkehrsteilnehmers 28 durch Ausblenden geeigneter Fernlichtsegmente 22 vermieden werden. Eine indirekte Blendung durch Reflexion der abgeblendeten Lichtverteilung wird wie erläutert durch Ausblendung der zugeordneten Abblendlicht-Segmente 16' vermieden oder verringert. Abweichend von Figur 2 ist hier zusätzlich der Abblendlicht-Zusatzspot 18 deaktiviert, da der Verkehrsteilnehmer 28 in dem Bereich erkannt wurde, welcher durch den Zusatzspot 18 ausgeleuchtet werden würde.

Ein grundlegender Aspekt der Erfindung besteht somit darin, in der abgeblendeten Lichtverteilung einen Bereich im Vorfeld des Kraftfahrzeugs derart aus der abgeblendeten Lichtverteilung auszublenden, dass für einen erkannten Verkehrsteilnehmer eine Blendung durch reflektiertes Licht an der Fahrbahnoberfläche weitgehend vermieden wird.

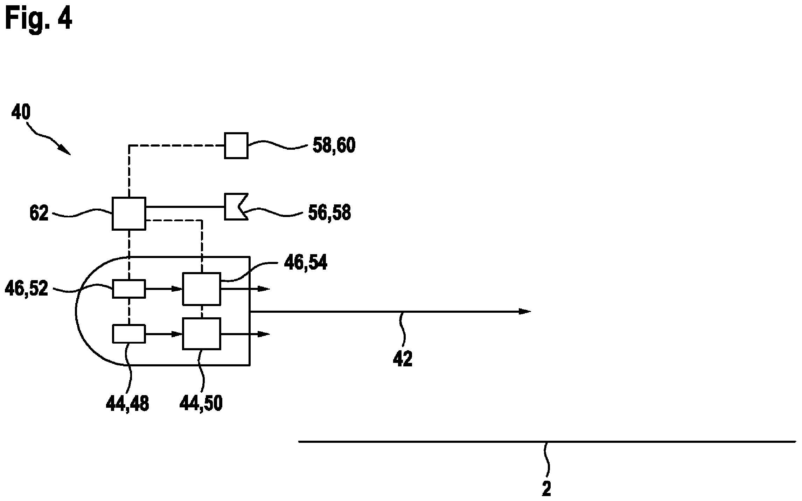

Um die Lichtverteilungen wie beschriebenen bereitzustellen, kann eine entsprechend ausgestaltete Beleuchtungseinrichtung 40 Verwendung finden, wie sie in der Figur 4 schematisch skizziert ist. Die Beleuchtungseinrichtung 40 strahlt ihre Lichtverteilungen um eine Hauptabstrahlrichtung 42 ab, welche im bestimmungsgemäßen Betrieb in einem Kraftfahrzeug (nicht dargestellt) im Wesentlichen der Fahrtrichtung entspricht, so dass die Fahrbahn 2 ausgeleuchtet wird.

Die Beleuchtungseinrichtung 40 umfasst eine Abblendlichteinrichtung 44 zur Abgabe einer abgeblendeten Lichtverteilung, sowie vorzugsweise auch eine Fernlichteinrichtung 46 zur Abgabe der Fernlichtverteilung. Die Fernlichteinrichtung 46 kann jedoch auch unabhängig von der Abblendlichteinrichtung 44 realisiert sein.

Die Abblendlichteinrichtung 44 weist insbesondere eine Abblendlicht-Lichtquelle 48 auf, mit welcher die abgeblendete Lichtverteilung gespeist wird. Ferner ist eine Blendschutzeinrichtung 50 für die abgeblendete Lichtverteilung vorgesehen, mittels welcher wie erläutert ausgeblendete Zonen 16' in der abgeblendeten Lichtverteilung erzeugt werden können (vgl. Figuren 2 und 3). Hierbei muss es sich nicht um eine separate Einrichtung handeln, sondern die Abblendlicht-Lichtquelle 48 und die Abblendlicht-Blendschutzeinrichtung 50 können auch gemeinsam realisiert werden, beispielsweise durch eine Ausgestaltung der Abblendlicht-Lichtquelle 48 mit einer Vielzahl von separat ansteuerbaren Einzellichtquellen, die einzeln aktivierbar und deaktivierbar sind.

Die Fernlichteinrichtung 46, soweit vorgesehen, umfasst eine Fernlicht-Lichtquelle 52 und eine FernlichtBlendschutzeinrichtung 54, mittels welcher wie erläutert Fernlichtsegmente 22' aus der Fernlichtverteilung ausgeblendet werden können. Auch hier ist eine einheitliche Ausgestaltung mit einer entsprechenden Komplex-Lichtquelle umfassend eine Vielzahl von individuell aktivierbaren und deaktivierbaren Einzellichtquellen denkbar.

Die Beleuchtungseinrichtung 40 hat eine Bildaufnahmeeinrichtung 56, beispielsweise eine CCD-Kamera. Mit dieser kann ein Sichtfeld in Fahrtrichtung 42 überwacht werden und so auf der Fahrbahn 2 vorhandene Verkehrsteilnehmer erkannt werden. Die Beleuchtungseinrichtung 40 umfasst auch eine Detektionseinrichtung zur Erkennung von Feuchtigkeit auf der Fahrbahn. Die Detektionseinrichtung 58 kann ein Regensensor 60 sein oder diesen umfassen. Denkbar ist auch, dass die Detektionseinrichtung die Bildaufnahmeeinrichtung 56 umfasst, mittels welcher an der Fahrbahn 2 reflektiertes Licht erkannt werden kann und auf reflektierende Nässe geschlossen werden kann.

Die Beleuchtungseinrichtung 40 umfasst außerdem eine Steuereinrichtung 62. Diese wirkt insbesondere als Bildauswerteeinrichtung für die Bildaufnahmeeinrichtung 56, um Verkehrsteilnehmer im Sichtfeld zu erkennen. Die Bildauswerteeinrichtung kann jedoch auch separat von einer etwaigen Steuereinrichtung vorgesehen sein. Die Steuereinrichtung 62 ist - integriert mit der Bildauswerteeinrichtung oder separat hiervon - außerdem dazu eingerichtet, die Abblendlichtquelle 48 und/oder die Abblendlicht-Blendschutzeinrichtung 50, sowie die Fernlicht-Lichtquelle 52 und/oder die FernlichtBlendschutzeinrichtung 54 anzusteuern, so dass die vorstehend beschriebenen Verfahren ausgeführt werden.

## Patentansprüche

1. Verfahren zur Bereitstellung eines blendfreien Frontlichtes für ein auf einer Fahrbahn (2) fahrendes Kraftfahrzeug (Kfz),
wobei eine abgeblendete Lichtverteilung (10, 14) mit einer zumindest abschnittsweise horizontal verlaufenden Hell-Dunkel-Grenze (12) und eine Fernlichtverteilung (20) zumindest abschnittsweise oberhalb der Hell-Dunkel-Grenze (12) ausgestrahlt wird,
wobei mit einer Bildaufnahmeeinrichtung (56) ein Sichtfeld überwacht wird und Vorhandensein und Lage von Verkehrsteilnehmern (28) in dem Sichtfeld erkannt wird, wobei das Sichtfeld ein von einer Beleuchtungseinrichtung ausgehender Raumwinkelbereich ist, wobei das Sichtfeld in Projektion auf einen senkrecht zur Abstrahlrichtung der Beleuchtungseinrichtung aufgespannten Testschirm betrachtet werden kann, wobei mit einer Detektionseinrichtung (58) erkannt wird, ob Feuchtigkeit auf der Fahrbahn vorhanden ist, und wobei dann, wenn Feuchtigkeit auf der Fahrbahn (2) erkannt wird und ein Verkehrsteilnehmer (28) in dem Sichtfeld erkannt wird, eine dem erkannten Verkehrsteilnehmer (28) zugeordnete ausgeblendete Zone (16') in der abgeblendeten Lichtverteilung (14) derart erzeugt wird, dass eine Blendung des Verkehrsteilnehmers (28) durch Reflexion der abgeblendeten Lichtverteilung an der nassen Fahrbahnoberfläche weitgehend vermieden wird,
**dadurch gekennzeichnet, dass** die ausgeblendete Zone (16') einen streifenförmigen Bereich in der abgeblendeten Lichtverteilung (14) umfasst, welcher sich ausgehend von der Hell-Dunkel-Grenze (12) unterhalb der Hell-Dunkel-Grenze (12) erstreckt, wobei dann, wenn ein Verkehrsteilnehmer (28) erkannt wird, eine dem erkannten Verkehrsteilnehmer (28) zugeordnete ausgeblendete Fernlichtzone (22') in der ausgestrahlten Fernlichtverteilung (20) erzeugt wird wobei die ausgeblendete Fernlichtzone (22') eine horizontale Breite im Sichtfeld aufweist, welche größer ist als die horizontale Breite im Sichtfeld der zugeordneten ausgeblendeten Zone (16') in der abgeblendeten Lichtverteilung.

2. Verfahren nach Anspruch 1, **dadurch gekennzeichnet, dass** für einen erfassten Verkehrsteilnehmer (28) dessen Ausdehnung in dem Sichtfeld ermittelt wird, und dass die erzeugte ausgeblendete Zone (16') im Sichtfeld eine horizontale Breite aufweist, die der erfassten Ausdehnung entspricht oder größer als die erfasste Ausdehnung ist.

3. Verfahren nach einem der vorherigen Ansprüche, **dadurch gekennzeichnet, dass** eine Zusatzausleuchtung (18) in Bereichen der abgeblendeten Lichtverteilung bereitgestellt wird, welche derart angeordnet sind, dass eine Blendung des erkannten Verkehrsteilnehmers (28) durch Reflexion der Zusatzausleuchtung (18) an der Fahrbahn (2) vermieden wird.

4. Verfahren nach einem der vorherigen Ansprüche, **dadurch gekennzeichnet, dass** ein Bildsignal der Bilderkennungseinrichtung (56) ausgewertet wird und dadurch erkannt wird, ob Feuchtigkeit auf der Fahrbahn (2) vorhanden ist.

5. Beleuchtungseinrichtung (40) zur Bereitstellung eines blendfreien Frontlichtes für ein auf einer Fahrbahn (2) fahrendes Kraftfahrzeug (Kfz), umfassend eine Abblendlichteinrichtung (44) zur Abgabe einer abgeblendeten Lichtverteilung mit einer zumindest abschnittsweise horizontal verlaufenden Hell-Dunkel-Grenze (12), und eine Fernlichteinrichtung zur Abgabe einer Fernlichtverteilung (20) mit einer zumindest abschnittsweise oberhalb der Hell-Dunkel-Grenze (12) liegenden Fernlichtzone (22'),
und eine Bildaufnahmeeinrichtung (56) mit einer zugeordneten Bildauswerteeinrichtung (62), welche dazu eingerichtet sind, in einem Sichtfeld das Vorhandensein und die Lage von Verkehrsteilnehmern (28) zu erkennen, wobei das Sichtfeld ein von der Beleuchtungseinrichtung ausgehender Raumwinkelbereich ist, wobei das Sichtfeld in Projektion auf einen senkrecht zur Abstrahlrichtung der Beleuchtungseinrichtung aufgespannten Testschirm betrachtet werden kann, wobei eine Detektionseinrichtung (58) zur Erkennung von Feuchtigkeit auf der Fahrbahn (2) vorgesehen ist, wobei die Abblendlichteinrichtung (44) eine Blendschutzeinrichtung (50) zur Erzeugung von wenigstens einer ausgeblendeten Zone (16') in veränderbarer Lage in der abgeblendeten Lichtverteilung aufweist, und dass eine Fernlichtblendschutzeinrichtung (54) zur Erzeugung von wenigstens einer ausgeblendeten Fernlichtzone (22') in veränderbarer Lage in der Fernlichtverteilung vorgesehen ist wobei die Blendschutzeinrichtung (50) derart mit der Detektionseinrichtung (58) und der Bildauswerteeinrichtung (62) zusammenwirkt, dass dann, wenn Feuchtigkeit auf der Fahrbahn (2) erkannt wird und ein Verkehrsteilnehmer (28) in dem Sichtfeld erkannt wird, eine dem erkannten Verkehrsteilnehmer (28) zugeordnete ausgeblendete Zone (16') in der abgeblendeten Lichtverteilung und in der Fernlichtverteilung (20) derart erzeugt wird, dass eine Blendung des Verkehrsteilnehmers (28) durch Reflexion der abgeblendeten Lichtverteilung an der nassen Fahrbahnoberfläche weitgehend vermieden wird, **dadurch gekennzeichnet, dass** die ausgeblendete Zone (16') einen streifenförmigen Bereich in der abgeblendeten Lichtverteilung (14) umfasst, welcher sich ausgehend von der Hell-Dunkel-Grenze (12) erstreckt, wobei dann, wenn ein Verkehrsteilnehmer (28) erkannt wird, eine dem erkannten Verkehrsteilnehmer (28) zugeordnete Fernlichtzone (22') in der Fernlichtverteilung (20) erzeugt wird und wobei die ausgeblendete Fernlichtzone (22') eine horizontale Breite im Sichtfeld aufweist, welche größer ist als die horizontale Breite im Sichtfeld der zugeordneten ausgeblendeten Zone (16') in der abgeblendeten Lichtverteilung ist.

6. Beleuchtungseinrichtung nach Anspruch 5, **dadurch gekennzeichnet, dass** die Detektionseinrichtung (58) einen Regensensor (60) oder einen Feuchtigkeitssensor umfasst.

## Claims

1. A method for providing a glare-free front light for a motor vehicle traveling on a roadway (2),
wherein a low beam light distribution (10, 14) with a cut-off line (12) extending horizontally at least sectionally and a main beam light distribution (20) is emitted at least sectionally above the cut-off line (12),
wherein a field of view is monitored with an image recording device (56), and the presence and position of road users (28) in the field of view is detected, wherein the field of view is a solid angle range emanating from an lighting device, wherein the field of view can be viewed in projection onto a test screen extending perpendicularly to the radiation direction of the lighting device, wherein it is detected with a detection device (58) whether moisture is present on the roadway (2) and wherein, if moisture is detected on the roadway (2) and a road user (28) is detected in the field of view, a detection device (58) is used to detect the presence of moisture on the roadway (2), a blanked-out zone (16') assigned to the detected road user (28) is generated in the low beam light distribution (14) in such a way that a blinding of the road user (28) from reflection of the low beam light distribution on the wet roadway surface is largely avoided,
**characterized in that** the blanked-out zone (16') comprises a strip-shaped region in the low beam light distribution (14) which, starting from the cut-off line (12), extends below the cut-off line (12), wherein when a road user (28) is detected, a blanked-out main beam zone (22') associated with the detected road user (28) is generated in the emitted main beam distribution (20), wherein the blanked-out main beam zone (22') has a horizontal width in the field of view which is greater than the horizontal width in the field of view of the associated blanked-out zone (16') in the low beam light distribution.

2. The method according to claim 1, **characterized in that** the extent of a detected road user (28) is determined in the field of view, and the generated blanked-out zone (16') in the field of view has a horizontal width which corresponds to the detected extent, or is greater than the detected extent.

3. The method according to one of the preceding claims, **characterized in that** an additional illumination (18) is provided in regions of the low beam light distribution which are arranged such that a blinding of the detected road user (28) from reflection of the additional illumination (18) on the roadway (2) is avoided.

4. The method according to one of the preceding claims, **characterized in that** an image signal of the image recognition device (56) is evaluated, thereby detecting whether moisture is present on the roadway (2).

5. A lighting device (40) for providing a glare-free front light for a motor vehicle traveling on a roadway (2), comprising a low beam device (44) for emitting a low beam light distribution with a cut-off line (12) extending horizontally at least sectionally, and a main beam device for emitting a main beam light distribution (20) with a main beam light zone (22') lying at least sectionally above the cut-off line (12),
and an image recording device (56) with an associated image evaluation device (62), which are configured to detect the presence and position of road users (28) in a field of view, wherein the field of view is a solid angle range emanating from the lighting device, wherein the field of view can be viewed in projection onto a test screen extending perpendicularly to the radiation direction of the lighting device, wherein a detection device (58) is provided for detecting moisture on the roadway (2), wherein the dipped beam device (44) has an anti-glare device (50) for generating at least one blanked-out zone (16') in a variable position in the dipped beam light distribution, and a main beam anti-glare device (54) is provided for generating at least one blanked-out main beam zone (22') in a variable position in the main beam distribution, wherein the anti-glare device (50) interacts with the detection device (58) and the image evaluation device (62) in such a manner in that, when moisture is detected on the roadway (2) and a road user (28) is detected in the field of view, a blanked-out zone (16') assigned to the detected road user (28) is generated in the dimmed light distribution and in the main beam distribution (20) in such a manner that a blinding of the road user (28) from reflection of the dimmed light distribution on the wet road surface is largely avoided, **characterized in that** the blanked-out zone (16') comprises a strip-shaped region in the dimmed light distribution (14) which extends starting from the cut-off line (12), wherein when a road user (28) is detected, a high beam zone (22') associated with the detected road user (28) is generated in the high beam light distribution (20), and wherein the blanked-out high beam zone (22') has a horizontal width in the field of view which is greater than the horizontal width in the field of view of the associated blanked-out zone (16') in the dimmed light distribution.

6. The lighting device according to claim 5, **characterized in that** the detection device (58) comprises a rain sensor (60) or a moisture sensor.

## Revendications

1. Procédé destiné à fournir un feu avant anti-éblouissant pour un véhicule automobile circulant sur une chaussée (2),
dans lequel une répartition de lumière adoucie (10, 14) avec une limite claire-obscure (12) s'étendant horizontalement au moins par sections et une répartition de feux de route (20) est émise au moins par sections au-dessus de la limite claire-obscure (12),
dans lequel un champ de vision est surveillé au moyen d'un dispositif de capture d'image (56) et la présence et la position d'usagers de la route (28) dans le champ de vision sont détectées, dans lequel le champ de vision est une zone à angle solide émanant d'un dispositif d'éclairage, dans lequel le champ de vision peut être visualisé en projection sur un écran de test tendu perpendiculairement à la direction d'émission du dispositif d'éclairage, dans lequel un dispositif de détection (58) permet de détecter s'il y a de l'humidité sur la chaussée, et dans lequel, lorsque de l'humidité est détectée sur la chaussée (2) et qu'un usager de la route (28) est détecté dans le champ de vision, une zone masquée (16') associée à l'usager détecté de la route (28) est générée dans la répartition de lumière adoucie (14) de manière à éviter dans une large mesure un éblouissement de l'usager de la route (28) dû à la réflexion de la répartition de lumière adoucie sur la surface de chaussée mouillée, **caractérisé par le fait que** la zone masquée (16') comprend une zone en forme de bande dans la répartition de lumière adoucie (14), qui s'étend à partir de la limite claire-obscure (12) au-dessous de la limite claire-obscure (12), dans lequel, lorsqu'un usager de la route (28) est détecté, une zone de feux de route masquée (22') associée à l'usager détecté de la route (28) est générée dans la répartition de feux de route (20) émise, dans lequel la zone de feux de route masquée (22') présente une largeur horizontale dans le champ de vision qui est supérieure à la largeur horizontale dans le champ de vision de la zone masquée associée (16') dans la répartition de lumière adoucie.

2. Procédé selon la revendication 1, **caractérisé par le fait qu'**on détermine l'étendue d'un usager détecté de la route (28) dans le champ de vision, et que la zone masquée générée (16') dans le champ de vision présente une largeur horizontale qui correspond à l'étendue détectée ou qui est supérieure à l'étendue détectée.

3. Procédé selon l'une quelconque des revendications précédentes, **caractérisé par le fait qu'**un éclairage supplémentaire (18) est fourni dans des zones de la répartition de lumière adoucie, qui sont agencées de manière à ce qu'un éblouissement de l'usager détecté de la route (28) dû à la réflexion de l'éclairage supplémentaire (18) sur la chaussée (2) soit évité.

4. Procédé selon l'une quelconque des revendications précédentes, **caractérisé par le fait qu'**un signal d'image du dispositif de reconnaissance d'image (56) est évalué et qu'il est ainsi reconnu si de l'humidité est présente sur la chaussée (2).

5. Dispositif d'éclairage (40) destiné à fournir un feu avant anti-éblouissant pour un véhicule automobile circulant sur une chaussée (2), comprenant un dispositif de feux de croisement (44) pour émettre une répartition de lumière adoucie avec une limite claire-obscure (12) s'étendant horizontalement au moins par sections, et un dispositif de feux de route destiné à émettre une répartition de feux de route (20) avec une zone de feux de route (22') se situant au moins par sections au-dessus de la limite claire-obscure (12),
et un dispositif de capture d'image (56) avec un dispositif d'évaluation d'image (62) associé qui est configuré pour détecter la présence et la position d'usagers de la route (28) dans un champ de vision, dans lequel le champ de vision est une zone à angle solide émanant du dispositif d'éclairage, dans lequel le champ de vision peut être visualisé en projection sur un écran de test tendu perpendiculairement à la direction d'émission du dispositif d'éclairage, dans lequel un dispositif de détection (58) est prévu pour détecter s'il y a de l'humidité sur la chaussée (2), dans lequel le dispositif de feux de croisement (44) comprend un dispositif anti-éblouissement (50) pour générer au moins une zone masquée (16') en position variable dans la répartition de lumière adoucie, et qu'un dispositif anti-éblouissement de feux de route (54) est prévu pour générer au moins une zone de feux de route masquée (22') en position variable dans la répartition de feux de route, dans lequel ledit dispositif anti-éblouissement (50) agit de concert avec le dispositif de détection (58) et avec le dispositif d'évaluation d'image (62) de telle manière que, lorsque de l'humidité est détecté sur la chaussée (2) et qu'un usager de la route (28) est détecté dans le champ de vision, une zone masquée (16') associée à l'usager détecté de la route (28) est générée dans la répartition de lumière adoucie (14) et dans la répartition de feux de route (20) de manière à éviter dans une large mesure un éblouissement de l'usager de la route (28) dû à la réflexion de la répartition de lumière adoucie sur la surface de chaussée mouillée, **caractérisé par le fait que** la zone masquée (16') comprend une zone en forme de bande dans la répartition de lumière adoucie (14), qui s'étend à partir de la limite claire-obscure (12), dans lequel, lorsqu'un usager de la route (28) est détecté, une zone de feux de route (22') associée à l'usager détecté de la route (28) est générée dans la répartition de feux de route (20), et dans lequel la zone de feux de route masquée (22') présente une largeur horizontale dans le champ de vision qui est supérieure à la largeur horizontale dans le champ de vision de la zone masquée associée (16') dans la répartition de lumière adoucie.

6. Dispositif d'éclairage selon la revendication 5, **caractérisé par le fait que** le dispositif de détection (58) comprend un capteur de pluie (60) ou un capteur d'humidité.
